# EUROPÄISCHE PATENTSCHRIFT

(11) **EP 3 860 873 B1**
(45) Veröffentlichungstag und Bekanntmachung des Hinweises auf die Patenterteilung: **26.06.2024**
(21) Anmeldenummer: 19798539.3
(22) Anmeldetag: 27.09.2019
(51) Int. Cl.: B60K 6/442, B60K 6/547, B60K 6/36, B60K 6/387, F16H 3/00, F16H 3/12

(54) **HYBRIDANTRIEBSVORRICHTUNG FÜR EIN KRAFTFAHRZEUG**
HYBRID DRIVE DEVICE FOR A MOTOR VEHICLE
SYSTÈME DE MOTORISATION HYBRIDE POUR VÉHICULE À MOTEUR

(30) Priorität: 05.10.2018 DE 102018124633
(43) Veröffentlichungstag der Anmeldung: 11.08.2021
(73) Patentinhaber: Technische Universität Darmstadt, 64289 Darmstadt (DE)
(72) Erfinder: RINDERKNECHT, Stephan, 64297 Darmstadt (DE); SCHLEIFFER, Jean-Eric, 64283 Darmstadt (DE); VIEHMANN, Andreas, 55116 Mainz (DE)
(74) Vertreter: Habermann Intellectual Property Partnerschaft von Patentanwälten mbB
(86) Internationale Anmeldenummer: PCT/EP2019/076325
(87) Internationale Veröffentlichungsnummer: WO 2020/070030

(56) Entgegenhaltungen:
- EP-A1- 1 610 038
- DE-A1- 10 232 838
- DE-A1-102006 036 758
- DE-A1-102010 028 026
- US-A1- 2016 144 702

## Beschreibung

Die Erfindung betrifft eine Hybridantriebsvorrichtung für ein Kraftfahrzeug gemäß dem Oberbegriff von Anspruch 1.

Bei den aus der Praxis bekannten Hybridantriebsvorrichtung für Kraftfahrzeuge wird üblicherweise mindestens ein Elektromotor mit einem anderen Energieumwandler kombiniert, um das betreffende Fahrzeug anzutreiben. Dabei werden in den meisten Fällen Elektromotoren mit einem Verbrennungsmotor kombiniert, um auf der Grundlage der umfangreichen Erfahrungen der vergangenen Jahrzehnte mit Verbrennungsmotoren deren große Reichweite und die Möglichkeit einer raschen Betankung innerhalb eines engmaschigen Tankstellennetzes mit den Vorteilen eines Elektromotors kombinieren zu können, der einen sehr hohen Wirkungsgrad und einfache Möglichkeiten für eine Energierückgewinnung beispielsweise bei Bremsvorgängen bietet.

Ein oder mehrere Elektromotoren und ein Verbrennungsmotor können dabei beide gleichzeitig eine Abtriebswelle der Hybridantriebsvorrichtung antreiben, was als parallele Hybridantriebsvorrichtung bezeichnet wird. Bei einer seriellen Hybridantriebsvorrichtung sind nur Elektromotoren leistungsübertragend mit der Abtriebswelle verbunden, während mit dem anderen Energiewandler, üblicherweise mit einem Verbrennungsmotor, ein Teil oder die vollständige Leistung zur Verfügung gestellt wird, die mit dem Elektromotor auf die Abtriebswelle übertragen wird. Aus der Praxis sind auch Mischformen bekannt, bei denen ein Energieumwandler, üblicherweise ein Verbrennungsmotor, wahlweise seine Antriebsleistung unmittelbar auf die Abtriebswelle der Hybridantriebsvorrichtung übertragen kann oder seine während des Betriebs erzeugte Leistung dem anderen Energieumwandler, üblicherweise einem Elektromotor, zur Verfügung stellt, der seinerseits die Abtriebswelle der Hybridantriebsvorrichtung antreibt. Es ist ebenfalls möglich, dass die mit einem Energieumwandler erzeugte Leistung einer geeigneten Speichereinrichtung zugeführt wird, um sie bei Bedarf wieder abrufen und zum Antreiben des Kraftfahrzeugs verwenden zu können.

Zwischen den Energieumwandlern einerseits und der davon angetriebenen Abtriebswelle der Hybridantriebsvorrichtung andererseits ist üblicherweise ein Getriebe angeordnet, mit welchem verschiedene Übersetzungsverhältnisse ermöglicht werden. Ein Mehrfachkupplungsgetriebe ist beispielsweise in DE 102 32 838 A1 offenbart. Mit dem Getriebe soll einerseits ein Anfahren des Kraftfahrzeugs aus dem Stand und andererseits eine hohe Fahrtgeschwindigkeit während eines Fahrbetriebs jeweils möglichst effizient ermöglicht werden. Dabei ist es in vielen Fällen vorteilhaft, wenn eine Drehzahl der von den Energieumwandlern jeweils in Rotation versetzten Antriebswelle innerhalb eines für die betreffende Antriebsvorrichtung vorteilhaften Drehzahlbereichs bleibt. Verbrennungsmotoren für Personenkraftfahrzeuge sind üblicherweise für Drehzahlen in einem Bereich zwischen etwa 800 Umdrehungen pro Minute bis etwa 5.000 Umdrehungen pro Minute während eines länger andauernden Fahrbetriebs ausgelegt. Bei Elektromotoren ist es möglich, den Elektromotor für einen Betrieb innerhalb eines großen Drehzahlbereichs auszulegen und dabei auch den Elektromotor für eine maximale Drehzahl von bis zu 20.000 oder 25.000 Umdrehungen pro Minute oder sogar mehr auszulegen, weil bei hohen Drehzahlen elektrische Energie in vorteilhafter Weise mit einer hohen Leistungsdichte und damit mit kleinen Elektromotoren in Antriebsleistung umgewandelt werden kann. Mit dem Getriebe und den dadurch ermöglichten Übersetzungsverhältnissen wird versucht, die für die Erzeugung der Antriebsleistung verwendeten Energieumwandler, beispielsweise den Verbrennungsmotor und den mindestens einen Elektromotor jeweils innerhalb eines für den betreffenden Energieumwandler vorteilhaften Drehzahlbereichs zur Erzeugung der Antriebsleistung des Kraftfahrzeugs zu verwenden.

Insbesondere bei einer Antriebsvorrichtung, bei der die Antriebsleistung nicht ausschließlich von einem Elektromotor, sondern von mehreren Elektromotoren erzeugt wird oder optional ein Verbrennungsmotor zeitweilig oder dauerhaft zur Erzeugung der Antriebsleistung in das Getriebe eingekuppelt werden kann und deshalb mit unterschiedlichen Drehzahlen eine Antriebsleistung auf das Getriebe übertragen wird, ist es oftmals erstrebenswert, die Schaltvorgänge für einen Wechsel zwischen zwei Übersetzungsverhältnissen des Getriebes möglichst kurz und ohne komplexe Vorgänge zu gestalten, um möglichst effizient eine möglichst kontinuierlich aufrecht erhaltene beziehungsweise eine sich möglichst stetig verändernde Antriebsleistung auf die Abtriebswelle der Hybridantriebsvorrichtung übertragen zu können.

Beispielsweise in DE 10 2016 002 863 A1 wird eine Hybridantriebsvorrichtung mit einem Elektromotor und einem Verbrennungsmotor beschrieben, die einen rein elektromotorischen Betrieb ebenso wie einen rein verbrennungsmotorischen Betrieb sowie einen Mischbetrieb ermöglicht, mit welchem sowohl der Elektromotor als auch der Verbrennungsmotor jeweils einen Anteil der insgesamt erzeugten Antriebsleistung auf eine Abtriebswelle der Hybridantriebsvorrichtung übertragen. Dabei kann der Verbrennungsmotor mit Hilfe einer reibschlüssigen Kupplung optional mit dem Getriebe der Hybridantriebsvorrichtung verbunden werden und dadurch die Antriebsleistung des Verbrennungsmotors auf die Abtriebswelle der Hybridantriebsvorrichtung übertragen werden. Mit Hilfe des Elektromotors können einzelne Schaltvorgänge unterstützt werden, wobei der Elektromotor mechanische Getriebefunktionen ersetzen und eine Zugkraftunterstützung des Verbrennungsmotors bewirken kann. Die reibschlüssige Kupplung verbindet den Verbrennungsmotor mit einem Teilgetriebe, sodass der Verbrennungsmotor über das Teilgetriebe mit einem von mehreren Übersetzungsverhältnissen optional zum Antreiben der Abtriebswelle zugeschaltet werden kann, die kontinuierlich von dem Elektromotor angetrieben werden kann.

Aus EP 1 610 038 A1 ist eine Hybridantriebsvorrichtung mit zwei Elektromotoren bekannt, von denen jeder über eine zugeordnete Teilwelle mit einem Verbrennungsmotor verbindbar sind. Aus DE 10 2011 117 853 A1 ist eine Hybridantriebsvorrichtung mit zwei Elektromotoren bekannt, die jeweils über ein dem betreffenden Elektromotor zugeordnetes Teilgetriebe mit der Abtriebswelle der Hybridantriebsvorrichtung verbindbar sind. Durch die Verwendung von zwei Elektromotoren und zwei dem jeweiligen Elektromotor zugeordneten Teilgetrieben kann mit dieser Hybridantriebsvorrichtung eine unterbrechungsfreie Übertragung der von den Elektromotoren erzeugten Antriebsleistung der Abtriebswelle der Hybridantriebsvorrichtung ermöglicht werden. Ein üblicherweise als Range Extender verwendeter Verbrennungsmotor kann über eine Kupplung entweder mit einem der beiden Elektromotoren oder aber direkt mit der Abtriebswelle der Hybridantriebsvorrichtung gekoppelt werden, sodass sowohl ein serieller Hybridbetrieb als auch ein paralleler Hybridbetrieb möglich sind.

Die Verwendung von reibschlüssigen Kupplungen zwischen einem Verbrennungsmotor und einem Getriebe ermöglicht eine einfache und selbsttätige Anpassung der jeweiligen Drehzahlen während eines Kupplungsvorgangs, ohne dass eine externe Kontrolle und Anpassung der Drehzahlen zwingend erforderlich werden. Allerdings geht dies oftmals zu Lasten einer etwas reduzierten Effizienz während des Betriebs der Hybridantriebsvorrichtung und insbesondere während der Durchführung von Schaltvorgängen mit der Reibungskupplung und mit den an einem Schaltvorgang beteiligten Synchronisierungselementen, da regelmäßig Schleppverluste in den beteiligten Synchronisierungselementen entstehen. Durch eine externe Kontrolle, beispielsweise Eingriffe in die Steuerung des Verbrennungsmotors, kann versucht werden, diese Nachteile zu reduzieren.

Aus DE 10 2006 036 758 A1 ist eine Hybridantriebsvorrichtung bekannt, bei welcher zwei Elektromotoren mit unterschiedlichen Übersetzungsverhältnissen auf eine gemeinsame Getriebewelle eingekoppelt werden können. Aus US 2016/0144702 A1 ist eine Hybridantriebsvorrichtung bekannt, bei welcher die einem Elektromotor zugeordneten Teilgetriebe beide an einer Abtriebswelle des Verbrennungsmotors hintereinander angeordnet sind. Derartige Hybridantriebsvorrichtungen benötigen in axialer Richtung einen sehr großen Bauraum.

Aus DE 10 2010 028 026 A1 sind viele verschiedene Varianten einer Hybridantriebsvorrichtung bekannt, die jedoch jeweils einen großen Bauraum erfordern.

Es wird deshalb als eine Aufgabe der vorliegenden Erfindung angesehen, eine Hybridantriebsvorrichtung so auszugestalten, dass ein möglichst effizienter Betrieb der Hybridantriebsvorrichtung bei einem möglichst geringen Raumbedarf für die Hybridantriebsvorrichtung und insbesondere für das zwischen den einzelnen Energieumwandlern einerseits und der Abtriebswelle andererseits angeordnete Getriebe ermöglicht wird.

Diese Aufgabe wird erfindungsgemäß durch die Merkmale von Anspruch 1 gelöst.

Dabei kann optional vorgesehen sein, dass der Verbrennungsmotor entweder nur mit dem ersten Teilgetriebe oder nur mit dem zweiten Teilgetriebe verbunden werden kann. Alternativ kann es für bestimmte Anwendungsfälle auch vorteilhaft sein, dass der Verbrennungsmotor gleichzeitig mit dem ersten Teilgetriebe und mit dem zweiten Teilgetriebe verbindbar ist.

Durch den Verzicht auf eine reibschlüssige Kupplung sowie reibschlüssige Synchronisierungselemente zur Anbindung des Verbrennungsmotors kann ein vergleichsweise effizienter Betrieb der Hybridantriebsvorrichtung ermöglicht werden. Zudem kann die erfindungsgemäße Hybridantriebsvorrichtung vergleichsweise kostengünstig und mit einem äußerst geringen notwendigen Bauraum hergestellt und in ein Fahrzeug integriert werden. Durch die Verwendung von zwei Elektromotoren, die jeweils über ein zugeordnetes erstes, beziehungsweise zweites Teilgetriebe mit der Abtriebswelle verbindbar sind, kann die für einen Schaltvorgang des Verbrennungsmotors erforderliche Synchronisation der jeweiligen Drehzahlen mit einem der beiden Elektromotoren bewirkt werden, sodass keine reibschlüssige Kupplung oder Synchronisierung zum Ankuppeln des Verbrennungsmotors, beziehungsweise für einen Schaltvorgang benötigt wird, an welchem der Verbrennungsmotor beteiligt ist. Der Verbrennungsmotor kann durch die wahlweise mögliche formschlüssige Verbindung mit dem ersten Teilgetriebe oder mit dem zweiten Teilgetriebe mit verschiedenen Übersetzungsverhältnissen mit der Abtriebswelle verbunden werden. Für spezielle Schaltvorgänge kann der Verbrennungsmotor zudem mit beiden Teilgetrieben verbunden werden. Auch ein vollständiges Abkoppeln des Verbrennungsmotors von dem Getriebe ist grundsätzlich möglich, sodass ein ausschließlich elektromotorischer Antrieb des Kraftfahrzeugs ermöglicht wird, der bei bestimmten Betriebssituationen vorteilhaft sein kann. Dabei können auch bei dem ausschließlich elektromotorischen Antrieb wahlweise die Teilgetriebe sowie unterschiedliche Übersetzungen verwendet werden.

Durch den Verzicht auf eine reibschlüssige Kupplung bei der Anbindung des Verbrennungsmotors kann der insgesamt erforderliche Bauraum für die Hybridantriebsvorrichtung im Vergleich zu einer Hybridantriebsvorrichtung mit einer reibschlüssigen Kupplung reduziert werden. Durch die ausschließlich formschlüssige Verbindung der beiden Elektromotoren und des Verbrennungsmotors mit der Abtriebswelle wird eine besonders effiziente Übertragung der von den Elektromotoren und von dem Verbrennungsmotor erzeugten Antriebsleistung auf die Abtriebswelle begünstigt. Zudem ist der benötigte Bauraum im Vergleich mit konventionellen Hybridantriebsvorrichtungen gering und kann sehr effizient genutzt werden.

Die konstante Übersetzung, mit welcher der erste Elektromotor mit der ersten Antriebswelle des ersten Teilgetriebes und die konstante Übersetzung, mit welcher der zweite Elektromotor mit der zweiten Antriebswelle des zweiten Teilgetriebes verbunden ist, kann entweder identisch zueinander oder unterschiedlich vorgegeben sein. Auch eine bevorzugte Drehzahl und die bei dieser Drehzahl erreichbare Antriebsleistung des ersten Elektromotors und des zweiten Elektromotors können wahlweise gleich oder aber unterschiedlich vorgegeben sein. Werden die Übersetzungsverhältnisse, mit welchem der erste Elektromotor mit der ersten Antriebswelle und der zweite Elektromotor mit der zweiten Antriebswelle verbunden ist, unterschiedlich vorgegeben, so kann der Verbrennungsmotor durch eine formschlüssige Verbindung mit entweder der ersten Antriebswelle oder der zweiten Antriebswelle ebenfalls mit einem unterschiedlichen

Übersetzungsverhältnis über das betreffende Teilgetriebe mit der Abtriebswelle verbunden werden. Der erste Elektromotor und der zweite Elektromotor können bei einer Verbindung mit unterschiedlichen, aber jeweils konstanten Übersetzungen mit dem ersten Teilgetriebe oder mit dem zweiten Teilgetriebe mit einer voneinander abweichenden, für den betreffenden Elektromotor jedoch besonders effizienten Drehzahl betrieben werden und gleichwohl unterschiedliche Übersetzungsverhältnisse für die Erzeugung und Übertragung der Antriebsleistung auf die Abtriebswelle bewirken.

Gemäß einer optionalen Ausgestaltung des Erfindungsgedankens ist vorgesehen, dass das erste Teilgetriebe und das zweite Teilgetriebe jeweils zwei verschiedene Übersetzungsverhältnisse ermöglichen, die wahlweise mit Hilfe einer Schalteinrichtung vorgebbar sind. Auf diese Weise können mit den beiden Teilgetrieben insgesamt vier verschiedene Übersetzungsverhältnisse für die Übertragung der von den beiden Elektromotoren erzeugten Antriebsleistung auf die Abtriebswelle vorgegeben werden. Gleichzeitig kann ein vergleichsweise effizienter Betrieb der derart ausgestalteten Hybridantriebsvorrichtung ermöglicht werden, bei dem die Antriebsleistung mit einer möglichst geringen Anzahl von Zahnradeingriffen auf die Abtriebswelle übertragen werden kann und die Anzahl und Komplexität der für einen Wechsel zwischen den einzelnen Übersetzungsverhältnissen erforderlichen Schaltvorgänge reduziert werden. Für die jeweils möglichen Schaltvorgänge kann als weiterer Vorteil angeführt werden, dass der Verbrennungsmotor gleichzeitig mit beiden Teilgetrieben verbunden sein und entsprechend Antriebsleistung abgeben kann, wodurch auch während eines Gangwechsels des Verbrennungsmotors eine unterbrechungsfreie Übertragung einer Antriebsleistung mit Hilfe der formschlüssig ausgeführten Doppelkupplung unter Zuhilfenahme der Elektromotoren erreicht werden kann. Die Elektromotoren können als Zugkraftunterstützung und zur Drehzahlführung verwendet werden, um eine kontinuierliche Übertragung von Leistung von dem Verbrennungsmotor auf die Abtriebswelle zu ermöglichen.

Gemäß einer besonders vorteilhaften Ausgestaltung des Erfindungsgedankens ist vorgesehen, dass der erste Elektromotor über nur zwei Zahnradeingriffe über das erste Teilgetriebe mit der Abtriebswelle des Getriebes verbindbar ist, und dass der zweite Elektromotor über nur zwei Zahnradeingriffe über das zweite Teilgetriebe mit der Abtriebswelle des Getriebes verbindbar ist. Auch der Verbrennungsmotor kann erfindungsgemäß über nur zwei Zahnradeingriffe mit der Abtriebswelle verbunden werden. Durch die Möglichkeit, mit nur zwei Zahnradeingriffen die beiden Elektromotoren mit insgesamt vier verschiedenen Übersetzungsverhältnissen mit der Abtriebswelle verbinden zu können ergeben sich große Vorteile hinsichtlich der verbesserten Effizienz der Hybridantriebsvorrichtung sowie des deutlich geringeren Raumbedarfs im Verhältnis zu herkömmlichen Hybridantriebsvorrichtungen. Die erfindungsgemäße Hybridantriebsvorrichtung erlaubt eine äußerst kompakte Ausgestaltung des Getriebes und der Anordnung der beiden Elektromotoren in der Umgebung des Verbrennungsmotors. Dadurch kann die erfindungsgemäße Hybridantriebsvorrichtung auch bei Kraftfahrzeugen eingesetzt werden, bei denen die Vorgaben und Beschränkungen des zur Verfügung stehenden Bauraums herkömmliche Hybridantriebsvorrichtungen nicht zulassen würden, beziehungsweise nur Hybridantriebsvorrichtung mit einem erheblich eingeschränkten Funktionsumfang erlauben würden.

Der Funktionsumfang der erfindungsgemäßen Hybridantriebsvorrichtung lässt sich bei einer koaxialen Anordnung des Antriebs und Abtriebs optional dadurch erweitern, dass der Verbrennungsmotor mit einer Direktgangschalteinrichtung formschlüssig mit der Abtriebswelle des Getriebes verbindbar ist. Durch eine formschlüssige Verbindung des Verbrennungsmotors mit der Abtriebswelle wird eine besonders effiziente Übertragung der von dem Verbrennungsmotor erzeugten Antriebsleistung auf die Abtriebswelle des Getriebes und damit auf die angetriebenen Räder des Kraftfahrzeuges ermöglicht. Auf diese Weise wird mit lediglich einer weiteren Schalteinrichtung, der Direktgangschalteinrichtung, der Funktionsumfang der erfindungsgemäßen Hybridantriebsvorrichtung zusätzlich erweitert und eine direkte Übertragung der Antriebsleistung von dem Verbrennungsmotor auf die Abtriebswelle ermöglicht. Die Direktgangschalteinrichtung kann auch als zusätzlich mögliche weitere Schaltstellung einer bereits vorhandenen Schalteinrichtung ausgestaltet sein.

Optional wird eine besonders raumsparende und konstruktiv einfache Direktgangschalteinrichtung dadurch ermöglicht, dass die Direktgangschalteinrichtung mit Hilfe einer geeignet ausgebildeten Schaltmuffe einen formschlüssigen Eingriff mit einem drehfest mit der Abtriebswelle verbundenen ersten Abtriebszahnrad ermöglicht, wobei der formschlüssige Eingriff über mindestens eine Ausnehmung oder Ausformung in einer Zahnradscheibe eines zweiten Abtriebszahnrads erfolgt. Durch den Durchgriff durch ein erstes Abtriebszahnrad, mit welchem die Antriebsleistung von dem ersten Teilgetriebe oder von dem zweiten Teilgetriebe auf die Abtriebswelle übertragen wird, kann mit der Direktgangschalteinrichtung ein raumsparender formschlüssiger Durchgriff von der Verbrennungsmotorabtriebswelle auf die Abtriebswelle der Hybridantriebsvorrichtung ermöglicht werden.

Es ist grundsätzlich möglich, jedoch nicht zwingend erforderlich, dass der Verbrennungsmotor beispielsweise zum Schutz vor einer Überlastung des Verbrennungsmotors oder des Getriebes über eine zusätzliche reibschlüssige Kupplung mit dem Getriebe verbunden wird.

Nachfolgend werden verschiedene Ausführungsbeispiele des Erfindungsgedankens anhand der Zeichnung exemplarisch erläutert, die in der Zeichnung schematisch dargestellt sind. Es zeigt:
Fig. 1 eine schematische Funktionsdarstellung einer erfindungsgemäßen Hybridantriebsvorrichtung mit einem als Quermotor in einem Fahrzeug angeordneten Verbrennungsmotor und mit zwei Elektromotoren, die jeweils formschlüssig über ein Getriebe mit einer Abtriebswelle verbunden sind,
Fig. 2 eine schematische Konstruktionsdarstellung der in Fig. 1 gezeigten Hybridantriebsvorrichtung in einer Seitenansicht auf eine exemplarische Einbausituation in einem Fahrzeug,
Fig. 3 eine schematische Konstruktionsdarstellung der in Fig. 1 gezeigten Hybridantriebsvorrichtung in einer Draufsicht auf eine exemplarische Einbausituation in einem Fahrzeug,
Fig. 4 eine schematische Funktionsdarstellung einer abweichend ausgestalteten Hybridantriebsvorrichtung mit einem als Quermotor in einem Fahrzeug angeordneten Verbrennungsmotor,
Fig. 5 eine schematische Funktionsdarstellung einer kombinierten Schalteinheit mit einem in vier verschiedene Schaltzustände schaltbaren Schaltelement, die an Stelle von zwei gesonderten Schalteinheiten bei der in Fig. 4 dargestellten Hybridantriebsvorrichtung verwendet werden kann,
Fig. 6 eine schematische Funktionsdarstellung einer wiederum abweichend ausgestalteten Hybridantriebsvorrichtung mit einem als Quermotor in einem Fahrzeug angeordneten Verbrennungsmotor,
Fig. 7 eine schematische Funktionsdarstellung einer wiederum abweichend ausgestalteten Hybridantriebsvorrichtung mit einem als Quermotor in einem Fahrzeug angeordneten Verbrennungsmotor,
Fig. 8 eine schematische Funktionsdarstellung einer abweichend ausgestalteten Hybridantriebsvorrichtung mit einem als Längsmotor in einem Fahrzeug angeordneten Verbrennungsmotor,
Fig. 9 eine schematische Funktionsdarstellung einer abweichend ausgestalteten Hybridantriebsvorrichtung mit einem als Längsmotor in einem Fahrzeug angeordneten Verbrennungsmotor, wobei der Verbrennungsmotor formschlüssig direkt mit der Abtriebswelle verbunden werden kann, und
Fig. 10 eine schematische Funktionsdarstellung einer wiederum abweichend ausgestalteten Hybridantriebsvorrichtung mit einem als Längsmotor in einem Fahrzeug angeordneten Verbrennungsmotor, wobei der Verbrennungsmotor über zwei Schalteinheiten formschlüssig mit jeweils einem Teilgetriebe verbunden werden kann, wodurch besonders einfache und rasche Schaltvorgänge ermöglicht werden.

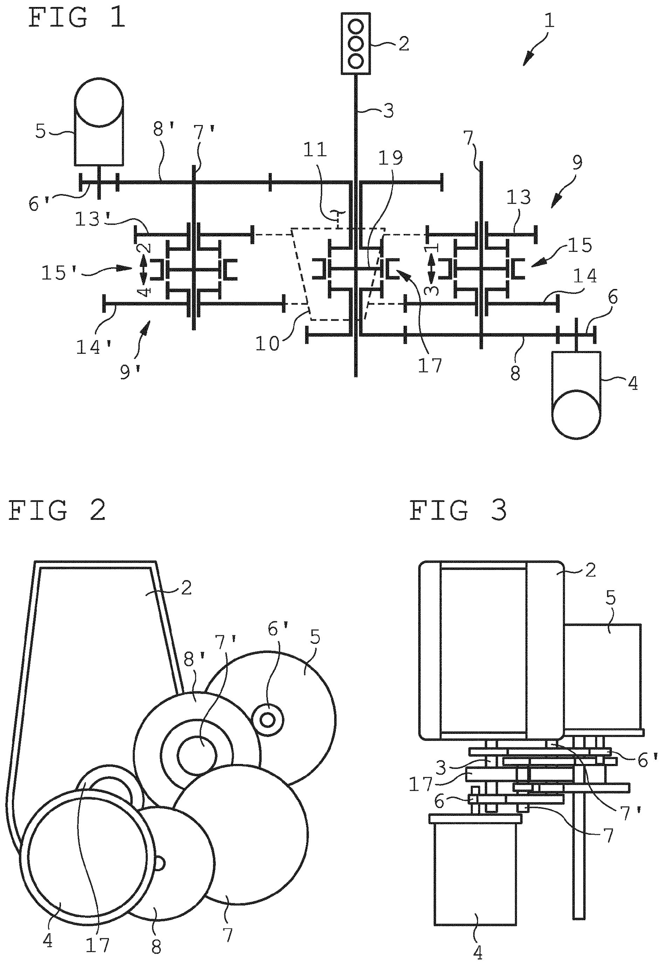

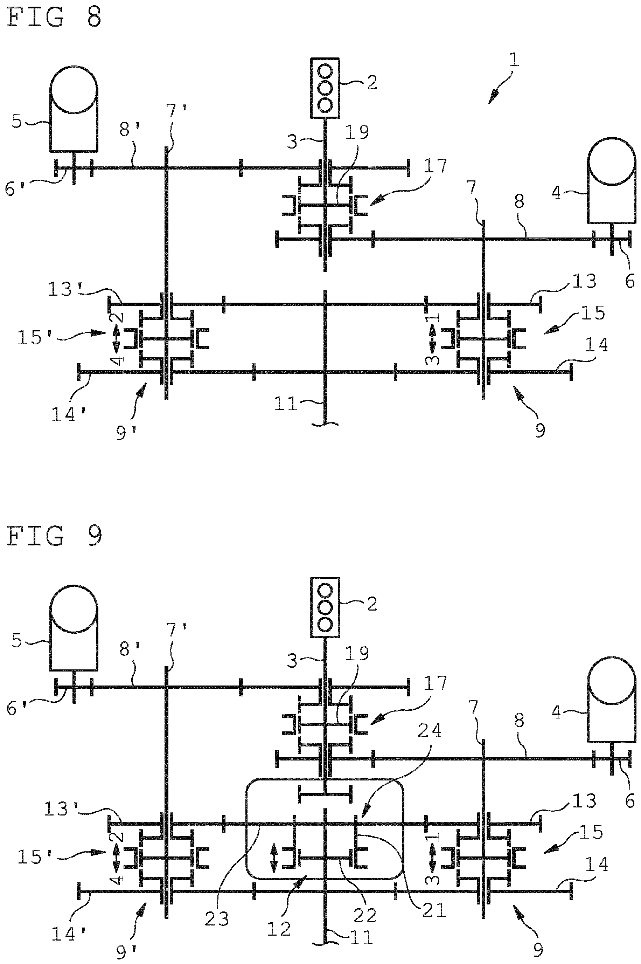

In den Figuren 1, 4, 6 und 7 sind jeweils schematisch erfindungsgemäße Hybridantriebsvorrichtungen 1 mit einem Verbrennungsmotor 2 dargestellt, der als Quermotor in dem Fahrzeug angeordnet ist und eine Verbrennungsmotorabtriebswelle 3 aufweist, die quer zu der Fahrtrichtung ausgerichtet ist. In den Figuren 8, 9 und 10 sind erfindungsgemäße Hybridantriebsvorrichtungen 1 mit einem Verbrennungsmotor 2 schematisch dargestellt, der als Längsmotor in dem Fahrzeug angeordnet ist und eine Verbrennungsmotorabtriebswelle 3 aufweist, die in Längsrichtung parallel zu der Fahrtrichtung angeordnet ist. Die Vorteile der erfindungsgemäßen Hybridantriebsvorrichtung 1, nämlich eine besonders kompakte und raumsparende Bauform mit ausschließlich formschlüssigen Schaltelementen, die ohne Schleppmomente bzw. ohne für das Zuhalten von Reibkupplungen erforderliche Energie betrieben werden können, und ein mit wenigen Zahnradeingriffen erfolgender und deshalb besonders effizienter Betrieb der Hybridantriebsvorrichtung 1 können bei beiden Varianten der Motoranordnung in dem Kraftfahrzeug verwirklicht und erreicht werden.

Bei allen exemplarisch dargestellten Ausführungsvarianten weist die erfindungsgemäße Hybridantriebsvorrichtung 1 einen ersten Elektromotor 4 und einen zweiten Elektromotor 5 auf, die jeweils über einen Zahnradeingriff eines drehfest mit dem betreffenden Elektromotor 4, 5 verbundenen Zahnrads 6, 6' mit einem drehfest mit einer ersten, bzw. zweiten Antriebswelle 7, 7' verbundenen Zahnrad 8, 8' in Eingriff stehen. Ein von dem jeweiligen Elektromotor 4, 5 erzeugtes Drehmoment wird über den jeweiligen Zahnradeingriff auf die zugeordnete erste bzw. zweite Antriebswelle 7, 7' eines ersten, bzw. zweiten Teilgetriebes 9, 9` übertragen. Dabei weisen die Zahnradeingriffe ein jeweils konstantes Übersetzungsverhältnis auf, sodass der erste Elektromotor 4 mit einer konstanten Übersetzung mit der ersten Antriebswelle 7 des ersten Teilgetriebes 9 und der zweite Elektromotor 5 mit einer konstanten Übersetzung mit einer zweiten Antriebswelle 7` des zweiten Teilgetriebes 9' verbunden ist. Das jeweils konstante Übersetzungsverhältnis kann je nach Anforderungen gleichgroß oder aber gegebenenfalls deutlich unterschiedlich sein. Auch der erste Elektromotor 4 und der zweite Elektromotor 5 können gleich oder gegebenenfalls deutlich unterschiedlich beispielsweise hinsichtlich der bevorzugten Umdrehungszahl und der Antriebsleistung vorgegeben werden. Es ist ebenfalls möglich, dass die beiden Elektromotoren 4, 5 abweichend zu den dargestellten Ausführungsbeispielen nicht mit einem konstanten Übersetzungsverhältnis mit der ersten bzw. zweiten Antriebswelle 7, 7' der beiden Teilgetriebe 9, 9' verbunden sein können.

Bei den in den Figuren 1 bis 7 dargestellten Hybridantriebsvorrichtungen 1 mit dem als Quermotor angeordneten Verbrennungsmotor 2 sind die beiden Antriebswellen 7, 7' der beiden Teilgetriebe 9, 9`über ein Differential 10 mit einer Abtriebswelle 11 der Hybridantriebsvorrichtung 1 verbunden. Dabei werden Zahnradeingriffe der beiden Teilgetriebe 9, 9' über gemeinsam genutzte Differentialräder des Differentials 10 realisiert, die identisch oder unterschiedlich ausgeführt sein können. Das Differential 10 ist in den Abbildungen 1, 4, 6 und 7 aus der Blickrichtung hinter weiteren Schaltelementen oder Komponenten der erfindungsgemäßen Hybridantriebsvorrichtung 1 angeordnet und deshalb nur vermeintlich überlagernd sowie zur Verdeutlichung mit gestrichelten Linien dargestellt.

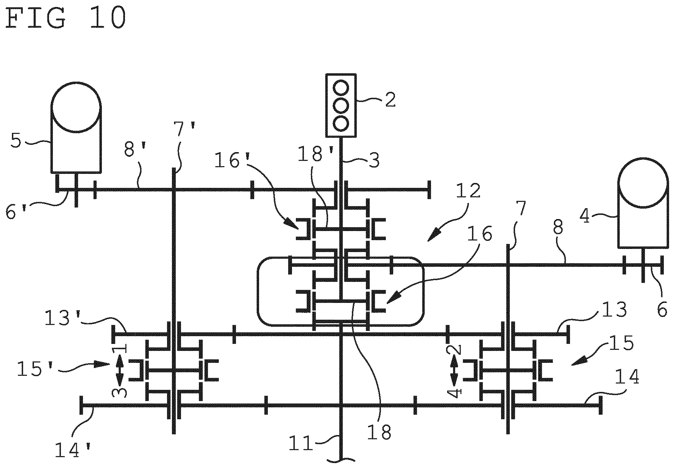

Bei einer Anordnung des Verbrennungsmotors 2 als Längsmotor, wie es bei den Ausführungsbeispielen in den Figuren 9 und 10 dargestellt ist, kann die Abtriebswelle 11 koaxial zu der Verbrennungsmotorabtriebswelle 3 angeordnet sein und dabei wahlweise über eine Direktgangschalteinrichtung 12 formschlüssig mit der Verbrennungsmotorabtriebswelle 3 verbunden werden.

Bei allen dargestellten Ausführungsbeispielen weisen die beiden Teilgetriebe 9, 9' ein erstes Teilgetriebezahnrad 13, 13` und ein davon abweichend ausgestaltetes zweites Teilgetriebezahnrad 14, 14` auf, mit welchen unterschiedliche Übersetzungsverhältnisse in den jeweiligen Teilgetrieben 9, 9' vorgegeben werden können. Mit einer geeignet ausgestalteten formschlüssigen Schalteinrichtung 15, 15` können wahlweise das erste Teilgetriebezahnrad 13, 13' oder das zweite Teilgetriebezahnrad 14, 14` oder keines der beiden Teilgetriebezahnräder 13, 13', 14, 14` mit der jeweiligen Antriebswelle 7, 7' der beiden Teilgetriebe 9, 9' verbunden werden, welche die Antriebsleistung des jeweils zugeordneten Elektromotors 4, 5 auf das betreffende Teilgetriebe 9, 9' überträgt. Mit einer geeigneten Auslegung der Elektromotoren 4, 5 und der beiden Teilgetriebe 9, 9` können auf diese Weise vier verschiedene Übersetzungsverhältnisse für die Übertragung der Antriebsleistung eines der beiden Elektromotoren 4, 5 auf die Abtriebswelle 11 der Hybridantriebsvorrichtung 1 ermöglicht werden, die wahlweise durch eine entsprechende Betätigung der Schalteinrichtungen 15, 15` vorgegeben werden können. Dabei können die verschiedenen Übersetzungsverhältnisse einen Bereich von beispielsweise etwa 20:1 bis 7:1 oder 3:1 abdecken. Es wäre ebenfalls möglich, mit weiteren Teilgetriebezahnrädern und Schalteinrichtungen zusätzlich weitere Übersetzungsverhältnisse vorzugeben und für den Betrieb der Hybridantriebsvorrichtung 1 zu ermöglichen.

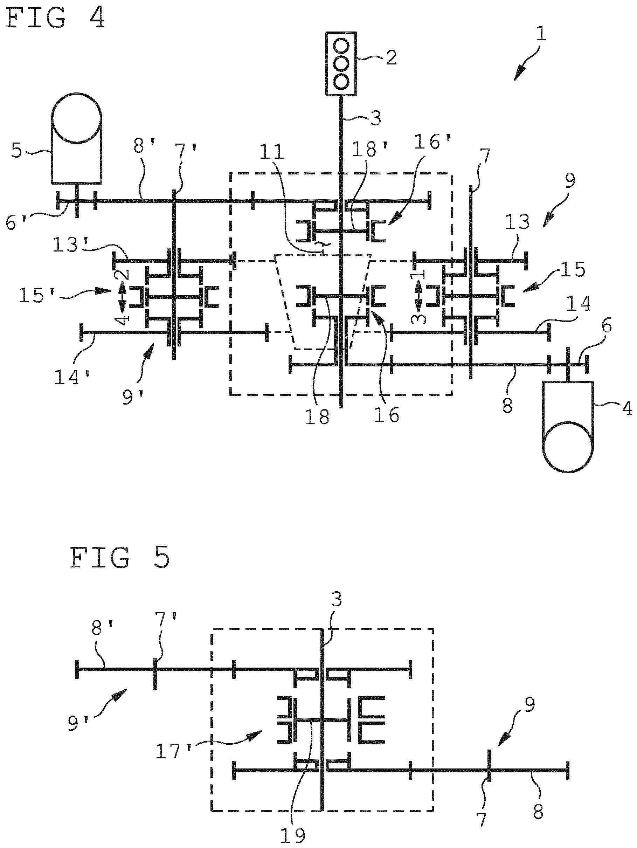

Bei dem in Figur 1 dargestellten Ausführungsbeispiel ist der Verbrennungsmotor 2 über eine zwei formschlüssige Verbindungen ermöglichende Schalteinrichtung 17 wahlweise formschlüssig mit einem der beiden Teilgetriebe 9, 9' verbindbar. Bei den in den Figuren 4 sowie 6 und 7 dargestellten Ausführungsbeispielen ist der Verbrennungsmotor 2 jeweils über zwei getrennte Verbrennungsmotorschalteinrichtungen 16, 16' wahlweise formschlüssig mit einem der beiden Teilgetriebe 9, 9' oder auch mit beiden Teilgetrieben 9, 9' verbindbar. Dabei wird jeweils ein Formschluss zwischen einem an dem jeweiligen Zahnrad befestigten Kupplungskörper mit entweder einem von zwei Schiebemuffenträgern 18, 18` der Verbrennungsmotorschalteinrichtungen 16, 16` oder mit einem gemeinsam genutzten Schiebemuffenträger 19 der Schalteinrichtung 17 oder der in Figur 5 näher dargestellten kombinierten Schalteinrichtung 17' für die Leistungsübertragung benutzt. Bei der beispielsweise in Figur 1 dargestellten Schalteinrichtung 17 kann mit einer Schaltmuffe wahlweise ein Formschluss zwischen dem gemeinsam genutzten Schiebemuffenträger 19 und einem von beiden angrenzenden und jeweils einem Zahnrad zugeordneten Kupplungskörpern bewirkt werden. Mit Hilfe von zwei Schiebemuffen kann bei der kombinierten Schalteinrichtung 17' wahlweise ein Formschluss zwischen dem gemeinsam genutzten Schiebemuffenträger 19 und einem oder auch beiden angrenzenden und jeweils einem Zahnrad zugeordneten Kupplungskörpern bewirkt werden. Dabei lassen sich durch eine geeignete Schaltvorgabe insgesamt vier verschiedene Übersetzungsverhältnisse in einem Bereich von beispielsweise 12:1 bis 3:1 realisieren. Bei allen exemplarisch dargestellten Ausführungsbeispielen kann der Verbrennungsmotor 2 durch eine entsprechende Schaltvorgabe auch von den beiden Teilgetrieben 9, 9' abgekoppelt werden.

Bei allen exemplarisch dargestellten Ausführungsvarianten erfolgt die formschlüssige Verbindung des Verbrennungsmotors 2 mit der Abtriebswelle 11 der Hybridantriebsvorrichtung 1 entweder über keinen oder über zwei Zahnradeingriffe. Damit kann sowohl die mit den Elektromotoren 4, 5 elektrisch erzeugte Antriebsleistung als auch die mit dem Verbrennungsmotor 2 erzeugte Antriebsleistung jeweils mit maximal zwei Zahnradeingriffen auf die Abtriebswelle 11 übertragen werden. Durch die geringe Zahl an Zahnradeingriffen ist eine besonders raumsparende Ausgestaltung und Anordnung der erfindungsgemäßen Hybridantriebsvorrichtung 1 möglich. Gleichzeitig wird auch ein besonders effizienter Betrieb der Hybridantriebsvorrichtung ermöglicht.

Bei dem in den Figuren 1 bis 3 dargestellten Ausführungsbeispiel ist der Verbrennungsmotor 2 über die Schalteinrichtung 17 wahlweise mit einem der beiden Zahnräder 8, 8' verbindbar, über die auch die beiden Elektromotoren 4, 5 mit dem jeweiligen Teilgetriebe 9, 9' verbunden sind. Mindestens ein Elektromotor 4 kann dabei oftmals raumsparend in unmittelbarer Umgebung des Verbrennungsmotors 2 angeordnet sein. Die beiden Elektromotoren 4, 5 sind bei dem in den Figuren 1 bis 3 dargestellten Ausführungsbeispiel entgegengerichtet ausgerichtet. Die Anordnung der einzelnen Komponenten der erfindungsgemäßen Hybridantriebsvorrichtung 1 gemäß der in Figur 1 dargestellten Ausgestaltung ist in den Figuren 2 und 3 exemplarisch dargestellt.

Bei dem in Figur 4 dargestellten Ausführungsbeispiel ist der Verbrennungsmotor 2 nicht über eine Schalteinrichtung 17, sondern über zwei getrennt angeordnete und schaltbare Schalteinrichtungen 16, 16' wahlweise mit einem oder mit beiden Teilgetrieben 9, 9' verbindbar. Eine wahlweise mit einem oder mit beiden Teilgetrieben 9, 9' herstellbare formschlüssige Verbindung kann auch über eine an Stelle der zwei getrennten Schalteinrichtungen 16, 16` verwendete kombinierte Schalteinrichtung 17' ermöglicht werden, wie sie in Figur 5 schematisch dargestellt ist. Die kombinierte Schalteinrichtung 17' ermöglicht die Funktionalität wie zwei getrennt angeordnete und schaltbare Schalteinrichtungen 16 und 16', weist jedoch nur einen gemeinsam genutzten Schiebemuffenträger 19 auf. Dabei kann je nach konstruktiver Ausgestaltung und Umsetzung mit der Schalteinrichtung 17 entweder wahlweise eine formschlüssige Verbindung mit dem ersten Teilgetriebe 9 oder mit dem zweiten Teilgetriebe 9' erfolgen, wie es in Figur 1 dargestellt ist, oder aber mit der in Figur 5 dargestellten kombinierten Schalteinrichtung 17' wahlweise eine formschlüssige Verbindung mit dem ersten Teilgetriebe 9, mit dem zweiten Teilgetriebe 9' oder mit beiden Teilgetrieben 9, 9' gleichzeitig erfolgen.

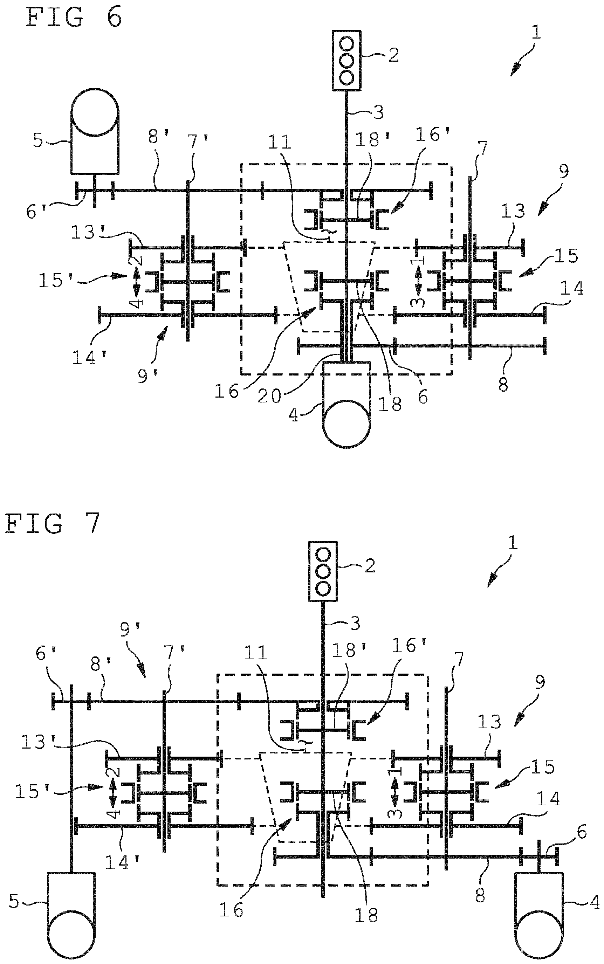

Bei dem in Figur 6 dargestellten Ausführungsbeispiel ist der erste Elektromotor 4 als Scheibenmotor ausgestaltet und in Verlängerung der Verbrennungsmotorabtriebswelle 3 angeordnet. An Stelle eines Scheibenmotors kann auch ein anders ausgestalteter Elektromotor 4 verwendet werden. Der Verbrennungsmotor 2 kann wahlweise über zwei getrennte Schalteinrichtungen 16, 16` oder über eine in Figur 6 nicht gesondert dargestellte kombinierte Schalteinrichtung 17' entweder mit einem Zahnrad 8` des zweiten Teilgetriebes 9' oder mit einer Abtriebswelle 20 des Elektromotors 4 verbunden werden. Dadurch kann eine besonders raumsparende Anordnung der beiden unterschiedlichen Elektromotoren 4, 5 und der gesamten Hybridantriebsvorrichtung 1 ermöglicht werden. Bei der Verwendung von einem Elektromotor 4, welcher den gleichen Drehzahlbereich wie der Verbrennungsmotor 2 aufweisen, können durch diese Anordnung weitere Zahnräder eingespart werden.

Bei dem in Figur 7 dargestellten Ausführungsbeispiel sind die beiden Elektromotoren 4, 5 gleichgerichtet und gleichsinnig drehend angeordnet. Eine derartige Anordnung der beiden Elektromotoren 4, 5 kann beispielsweise dann vorteilhaft sein, falls in der unmittelbaren Umgebung des Verbrennungsmotors 2 kein Platz für die Anordnung der Elektromotoren 4, 5 verfügbar ist.

Bei dem in Figur 8 dargestellten Ausführungsbeispiel ist der Verbrennungsmotor 2 als Längsmotor in dem Fahrzeug angeordnet. Die Verbrennungsmotorabtriebswelle 3 kann über eine Schalteinrichtung 17 wahlweise mit dem Zahnrad 8 des ersten Teilgetriebes 9 oder mit dem Zahnrad 8` des zweiten Teilgetriebes 9' verbunden werden. Die formschlüssige Verbindung des Verbrennungsmotors 2 kann die Übersetzungsverhältnisse der beiden Teilgetriebe 9, 9' nutzen und über insgesamt vier verschiedene Übersetzungsverhältnisse formschlüssig mit der Abtriebswelle 11 der Hybridantriebsvorrichtung 1 verbunden werden. Bei einer geeigneten Anordnung der beiden Elektromotoren 4, 5, die bei dem gezeigten Ausführungsbeispiel gleichsinnig drehend und gleichgerichtet in der unmittelbaren Umgebung des Verbrennungsmotors 2 angeordnet sind, kann eine besonders effiziente Raumausnutzung und ein damit einhergehend geringer Raumbedarf für die erfindungsgemäße Hybridantriebsvorrichtung 1 erreicht werden.

Bei dem in Figur 9 gezeigten Ausführungsbeispiel, bei welchem der Verbrennungsmotor 2 ebenfalls als Längsmotor angeordnet und die Verbrennungsmotorabtriebswelle 3 fluchtend mit der Abtriebswelle 11 der Hybridantriebsvorrichtung 1 angeordnet ist, kann die Verbrennungsmotorabtriebswelle 3 mit einer Direktgangschalteinrichtung 12 zusätzlich ohne einen Umweg über ein Teilgetriebe 9, 9' direkt mit der Abtriebswelle 11 der Hybridantriebsvorrichtung 1 verbunden werden.

Bei dem in Figur 10 dargestellten Ausführungsbeispiel für eine Hybridantriebsvorrichtung 1 mit einem wiederum als Längsmotor angeordneten Verbrennungsmotor 2 ist die Direktgangschalteinrichtung 12 im Wesentlichen in eine der beiden Schalteinrichtungen 16 für die formschlüssige Verbindung der Verbrennungsmotorabtriebswelle 3 mit dem zugeordneten Teilgetriebe 9 funktionsintegriert. Dadurch können Vorteile im Hinblick auf die Anzahl der notwendigen Ablaufschritte zur Steuerung des Schaltvorgangs des Verbrennungsmotors 2 sowie auf die insgesamt erforderliche Schaltdauer eines Schaltvorgangs erzielt werden. Ein wesentlicher Vorteil besteht in der Möglichkeit, ein Teilgetriebe für eine Übergangszeit gleichzeitig von zwei Schaltelementen aus betätigen zu können.

## Patentansprüche

1. Hybridantriebsvorrichtung (1) für ein Kraftfahrzeug mit einem Verbrennungsmotor (2), mit einem ersten Elektromotor (4) und mit einem zweiten Elektromotor (5), die über ein Getriebe mit einer Abtriebswelle (11) der Hybridantriebsvorrichtung (1) verbunden sind, wobei mit dem Getriebe mindestens zwei unterschiedliche Übersetzungsverhältnisse zwischen den beiden Elektromotoren (4, 5) und der Abtriebswelle (11) vorgegeben werden können, wobei das Getriebe ein erstes Teilgetriebe (9) und ein zweites Teilgetriebe (9`) aufweist, die jeweils mit der Abtriebswelle (11) verbindbar sind, wobei der erste Elektromotor (4) mit dem ersten Teilgetriebe (9) und der zweite Elektromotor (5) mit dem zweiten Teilgetriebe (9`) verbunden ist, und wobei der Verbrennungsmotor (2) wahlweise von dem Getriebe entkoppelbar ist oder formschlüssig mit mindestens einem Teilgetriebe (9, 9`) verbindbar ist, wobei der erste Elektromotor (4) mit einer konstanten Übersetzung mit einer ersten Antriebswelle (7) des ersten Teilgetriebes (9) und der zweite Elektromotor (5) mit einer konstanten Übersetzung mit einer zweiten Antriebswelle (7') des zweiten Teilgetriebes (9`) verbunden ist, wobei der erste Elektromotor (4) über einen Zahnradeingriff eines drehfest mit dem ersten Elektromotor (4) verbundenen Zahnrads (6) mit einem drehfest mit der ersten Antriebswelle (7) des ersten Teilgetriebes (9) verbundenen Zahnrad (8) in Eingriff mit dem ersten Teilgetriebe (9) steht, wobei der zweite Elektromotor (5) über einen Zahnradeingriff eines drehfest mit dem zweiten Elektromotor (5) verbundenen Zahnrads (6') mit einem drehfest mit der zweiten Antriebswelle (7') des zweiten Teilgetriebes (9') verbundenen Zahnrad (8') in Eingriff mit dem zweiten Teilgetriebe (9`) steht, und wobei der Verbrennungsmotor (2) formschlüssig mit der ersten Antriebswelle (7) des ersten Teilgetriebes (9) oder mit der zweiten Antriebswelle (7') des zweiten Teilgetriebes (9`) verbindbar ist, **dadurch gekennzeichnet, dass** der Verbrennungsmotor (2) über einen Zahnradeingriff mit dem Zahnrad (8) des ersten Teilgetriebes (9) oder über einen Zahnradeingriff mit dem Zahnrad (8') des zweiten Teilgetriebes (9`) formschlüssig verbindbar ist.

2. Hybridantriebsvorrichtung (1) nach Anspruch 1, **dadurch gekennzeichnet, dass** der Verbrennungsmotor (2) gleichzeitig mit dem ersten Teilgetriebe (9) und mit dem zweiten Teilgetriebe (9`) verbindbar ist.

3. Hybridantriebsvorrichtung (1) nach einem der vorausgehenden Ansprüche, **dadurch gekennzeichnet, dass** das erste Teilgetriebe (9) und das zweite Teilgetriebe (9`) jeweils zwei verschiedene Übersetzungsverhältnisse ermöglicht, die wahlweise mittels einer Schalteinrichtung (15, 15`) vorgebbar sind.

4. Hybridantriebsvorrichtung (1) nach einem der vorangehenden Ansprüche, **dadurch gekennzeichnet, dass** der erste Elektromotor (4) über nur zwei Zahnradeingriffe über das erste Teilgetriebe (9) mit der Abtriebswelle (11) des Getriebes verbindbar ist, und dass der zweite Elektromotor (5) über nur zwei Zahnradeingriffe über das zweite Teilgetriebe (9`) mit der Abtriebswelle (11) des Getriebes verbindbar ist.

5. Hybridantriebsvorrichtung (1) nach einem der vorangehenden Ansprüche, **dadurch gekennzeichnet, dass** der Verbrennungsmotor (2) über nur zwei Zahnradeingriffe über das erste Teilgetriebe (9) oder über das zweite Teilgetriebe (9`) mit der Abtriebswelle (11) des Getriebes verbindbar ist.

6. Hybridantriebsvorrichtung (1) nach einem der vorangehenden Ansprüche, **dadurch gekennzeichnet, dass** der Verbrennungsmotor (2) mit einer Direktgangschalteinrichtung (12) formschlüssig mit der Abtriebswelle (11) des Getriebes verbindbar ist.

## Claims

1. Hybrid drive system (1) for a motor vehicle comprising an internal combustion engine (2), a first electric motor (4) and a second electric motor (5), which are connected to an output shaft (11) of the hybrid drive system (1) via a gearbox, wherein at least two different transmission ratios between the two electric motors (4, 5) and the output shaft (11) can be preset by means of the gearbox, wherein the gearbox comprises a first gearbox part (9) and a second gearbox part (9'), each of which can be connected to the output shaft (11), wherein the first electric motor (4) is connected to the first gearbox part (9) and the second electric motor (5) is connected to the second gearbox part (9'), and wherein the internal combustion engine (2) can be selectively decoupled from the gearbox or connected in a form-fit manner to at least one gearbox part (9, 9'), wherein the first electric motor (4) is connected with a constant transmission ratio to a first drive shaft (7) of the first gearbox part (9) and the second electric motor (5) is connected with a constant transmission ratio to a second drive shaft (7') of the second gearbox part (9'), wherein the first electric motor (4) engages with the first gearbox part (9) via a toothed gearing between a gear wheel (6) co-rotatably connected to the first electric motor (4) and a gear wheel (8) co-rotatably connected to the first drive shaft (7) of the first gearbox part (9), wherein the second electric motor (5) engages with the second gearbox part (9') via a toothed gearing between a gear wheel (6') co-rotationally connected to the second electric motor (5) and a gear wheel (8') co-rotationally connected to the second transmission shaft (7') of the second gearbox part (9'), and wherein the internal combustion engine (2) can be connected in a form-fit manner to the first drive shaft (7) of the first gearbox part (9) or to the second drive shaft (7') of the second gearbox part (9'), **characterized in that** the internal combustion engine (2) can be connected in a form-fit manner to the gear wheel (8) of the first gearbox part (9) via a toothed gearing or to the gear wheel (8') of the second gearbox part (9') via a toothed gearing.

2. Hybrid drive system (1) according to claim 1, **characterized in that** the internal combustion engine (2) can be connected simultaneously to the first gearbox part (9) and to the second gearbox part (9').

3. Hybrid drive system (1) according to any one of the preceding claims, **characterized in that** the first gearbox part (9) and the second gearbox part (9') each enable two different transmission ratios which can be selectively preset by means of a gearshift device (15, 15').

4. Hybrid drive system (1) according to any one of the preceding claims, **characterized in that** the first electric motor (4) can be connected to the output shaft (11) of the gearbox by only two toothed gearings via the first gearbox part (9) and **in that** the second electric motor (5) can be connected to the output shaft (11) of the gearbox by only two toothed gearings via the second gearbox part (9').

5. Hybrid drive system (1) according to any one of the preceding claims, **characterized in that** the internal combustion engine (2) can be connected to the output shaft (11) of the gearbox by only two toothed gearings via the first gearbox part (9) or via the second gearbox part (9').

6. Hybrid drive system (1) according to any one of the preceding claims, **characterized in that** the internal combustion engine (2) can be connected in a form-fit manner to the output shaft (11) of the gearbox by means of a direct-drive shift device (12).

## Revendications

1. Système de motorisation hybride (1) pour un véhicule à moteur comportant un moteur à combustion interne (2), un premier moteur électrique (4) et un second moteur électrique (5), qui sont reliés à un arbre de sortie (11) du système de motorisation hybride (1) par le biais d'une boîte de vitesses, au moins deux rapports de transmission différents pouvant être prédéfinis entre les deux moteurs électriques (4, 5) et l'arbre de sortie (11) au moyen de la boîte de vitesses, la boîte de vitesses présentant une première partie de boîte de vitesses (9) et une seconde partie de boîte de vitesses (9'), qui peuvent chacune être reliées à l'arbre de sortie (11), le premier moteur électrique (4) étant relié à la première partie de boîte de vitesses (9) et le second moteur électrique (5) étant relié à la seconde partie de boîte de vitesses (9'), et le moteur à combustion interne (2) pouvant être sélectivement découplé de la boîte de vitesses ou relié par complémentarité de forme à au moins une partie de boîte de vitesses (9, 9'), le premier moteur électrique (4) étant relié avec un rapport de transmission constant à un premier arbre de transmission (7) de la première partie de boîte de vitesses (9) et le second moteur électrique (5) étant relié avec un rapport de transmission constant à un second arbre de transmission (7') de la seconde partie de boîte de vitesses (9'), le premier moteur électrique (4) étant en prise avec la première partie de boîte de vitesses (9) par le biais d'un engrenage de roues dentées entre une roue dentée (6) reliée solidaire en rotation au premier moteur électrique (4) et une roue dentée (8) reliée solidaire en rotation au premier arbre de transmission (7) de la première partie de boîte de vitesses (9), le second moteur électrique (5) étant en prise avec la seconde partie de boîte de vitesses (9') par le biais d'un engrenage de roues dentées entre une roue dentée (6') reliée solidaire en rotation au second moteur électrique (5) et une roue dentée (8') reliée solidaire en rotation au second arbre de transmission (7') de la seconde partie de boîte de vitesses (9'), et le moteur à combustion interne (2) pouvant être relié par solidarité de forme au premier arbre de transmission (7) de la première partie de boîte de vitesses (9) ou au second arbre de transmission (7') de la seconde partie de boîte de vitesses (9'), **caractérisé en ce que** le moteur à combustion interne (2) peut être relié par complémentarité de forme à la roue dentée (8) de la première partie de boîte de vitesses (9) par le biais d'un engrenage de roues dentées ou à la roue dentée (8') de la seconde partie de boîte de vitesses (9') par le biais d'un engrenage de roues dentées.

2. Système de motorisation hybride (1) selon la revendication 1, **caractérisé en ce que** le moteur à combustion interne (2) peut être relié simultanément à la première partie de boîte de vitesses (9) et à la seconde partie de boîte de vitesses (9').

3. Système de motorisation hybride (1) selon l'une des revendications précédentes, **caractérisé en ce que** la première partie de boîte de vitesses (9) et la seconde partie de boîte de vitesses (9') permettent chacune deux rapports de transmission différents qui peuvent être prédéfinis sélectivement au moyen d'un dispositif de changement de vitesse (15, 15').

4. Système de motorisation hybride (1) selon l'une des revendications précédentes, **caractérisé en ce que** le premier moteur électrique (4) peut être relié à l'arbre de sortie (11) de la boîte de vitesses par seulement deux engrenages de roues dentées par le biais de la première partie de boîte de vitesses (9) et **en ce que** le second moteur électrique (5) peut être relié à l'arbre de sortie (11) de la boîte de vitesses par seulement deux engrenages de roues dentées par le biais de la seconde partie de boîte de vitesses (9').

5. Système de motorisation hybride (1) selon l'une des revendications précédentes, **caractérisé en ce que** le moteur à combustion interne (2) peut être relié à l'arbre de sortie (11) de la boîte de vitesses par seulement deux engrenages de roues dentées par le biais de la première partie de boîte de vitesses (9) ou par le biais de la seconde partie de boîte de vitesses (9').

6. Système de motorisation hybride (1) selon l'une des revendications précédentes, **caractérisé en ce que** le moteur à combustion interne (2) peut être relié par complémentarité de forme à l'arbre de sortie (11) de la boîte de vitesses au moyen d'un dispositif de changement de vitesse direct (12).
